# EUROPEAN PATENT SPECIFICATION

(11) **EP 2 982 275 B1**
(45) Date of publication and mention of the grant of the patent: **10.06.2020**
(21) Application number: 14726216.6
(22) Date of filing: 01.04.2014
(51) Int. Cl.: A47J 31/00, A47J 31/56, A47J 31/44

(54) **MACHINE FOR PREPARING BEVERAGES, WITH MINIMUM ENERGY REQUIREMENTS, AND METHOD FOR OPERATING THE MACHINE**
MASCHINE ZUR HERSTELLUNG VON GETRÄNKEN MIT MINIMALEN ENERGIEBEDARF UND VERFAHREN ZUR VERWENDUNG DER MASCHINE
MACHINE DE PRÉPARATION DE BOISSONS À BESOINS MINIMES EN ÉNERGIE ET SON PROCÉDÉ DE FONCTIONNEMENT

(30) Priority: 02.04.2013 PT 10686313
(43) Date of publication of application: 10.02.2016
(73) Proprietor: Novadelta-Comércio e Industria de Cafés, Lda., 1950-041 Lisboa (PT)
(72) Inventor: NABEIRO, Rui Miguel, 7370-112 Campo Maior (PT)
(74) Representative: Miranda de Sousa, João Paulo Vaz
(86) International application number: PCT/PT2014/000019
(87) International publication number: WO 2014/163516

(56) References cited:
- EP-A1- 2 177 138
- EP-B1- 1 460 353
- DE-A1-102010 055 849
- US-A1- 2006 096 465

## Description

### Field of the invention

The present invention refers to the field of the machines for preparing aromatic beverages, such as for example coffee of the espresso type, tea and similar, and to the operation of such machines in energy efficient manner, in general, and in autonomous mode, i.e. without connection to external energy sources, in particular.

The present invention further discloses a process of operation of a machine of the aforementioned type.

### Background of the invention

The generality of the machines for preparing aromatic beverages, such as for example coffee of the espresso type, operates based upon the supply of electrical energy to a set of energy consumers provided in the machine. In the case of coffee machines of the espresso type, the main energy consumers are the fluid compression means, for example of the compression pump type, and the fluid heating means, for example of the boiler or thermo-block type. The respective operation parameters are usually in a pressure range above 8 bar, frequently above 12 bar, and fluid heating temperatures in a range of 80 °C to 100 °C. These operation parameters correspond to nominal power values relatively high, often above 1000 W. The reduction of the energy needs in each beverage preparation cycle, notably of the heating requirements, are particularly relevant in the case of machines of this type, especially when provided with energy storage means for supply energy at low voltage.

The document EP 1460353 B1 discloses a machine for preparation of coffee of the espresso type that operates based upon 230 V (AC) and that presents an inverter for increasing the tension when the energy supply is made from a battery, as well as first and second water heating means that collectively present an electrical power of 460 W up to 760 W. The document does not disclose the electrical power associated with the compression means. The document refers the impossibility of preparing a plurality of beverages of the espresso type with a machine presenting a power value below 500 W. The document EP 2471421 also refers the use of two heating means so as to ensure a beverage preparation time of 7 to 10 seconds, this time in a machine operating connected to a power distribution grid, each thereof with a power value of 1200 W. In particular, these documents do not refer constrains associated with the use of an internal source of temporary energy storage.

The document EP 2177138 A1 discloses a machine of the same class but provided with energy storage means of the battery type presenting a discharge power that is greater than 500 W and greater than the battery charging power.

The document US 2006/0096465 A1 disclosed a method and apparatus for optimizing variable liquid temperatures, whereby the input power is varied by an electronic controller in response to sensed data in accordance with a profile that represents a predetermined heating level. That is, the energy management device in this case presents a control routine based upon a predetermined profile.

The document DE 2010 055849 A1 discloses a method for regulating the preparation of hot water in a beverage preparation machine that regulates the compression and heating based upon the comparison of measured values of different operation parameters with values previously registered in a table in memory.

None of the documents of prior art discloses a machine with sufficient capacity of autonomous operation to prepare beverages, such as coffee of the espresso type or similar, in a relevant quantity of at least six, preferentially of at least twelve beverages, and with high readiness in successive manner.

### Brief description of the invention

The goal of the present invention is to provide a machine for preparing beverages from at least one aromatic edible substance, such as for example coffee of the espresso type, tea and similar, including by means of extraction cycles of said substance by means of a heated and pressurized fluid, and presenting a plurality of electrical energy consumers, including in particular fluid compression means and fluid heating means, means for connecting to at least one external energy source, preferentially to at least two external energy sources, such as for example two fixed electrical energy distribution grids of different nominal voltage in two different regions, including optionally by means of a voltage transformation device, and optimized so as to minimize the energy requirements associated with the preparation of each beverage.

This goal is attained according to claim 1.

In particular, the machine for preparation of beverages according to the present invention presents an energy management device provided so that it can regulate the operation of energy consumers, including at least of the fluid compression means and fluid heating means, by means of a control routine of the objective function type presenting at least one, preferentially previously defined, objective. According to a preferred embodiment, said objective function includes the objective of minimizing the energy consumption in each beverage extraction cycle.

According to another preferred embodiment, the regulation by means of a control routine of the objective function type is executed at least when the energy supply is carried out by said external energy source.

Moreover, a related goal of the present invention is to provide a portable beverage preparation machine and with the possibility of, at least temporarily, operation autonomously from said external energy source, in other words not connected to the latter, notably by means of using at least one internal energy source, such as for example a battery or similar, in particular so as to prepare successively a given minimum amount of beverages such as espresso type coffee, or similar, based only upon said internal energy source.

This goal is solved according to the present invention by means of a machine that presents at least one internal energy source and, at least when operating based thereupon, said control routine of the objective function type includes the objective of maximizing the number of beverages that can be prepared, in particular according to a set of previously defined operation parameters. These operation parameters include the compression pressure and the heating temperature of the fluid, as used in the beverage extraction cycle. In particular, it is preferred when said control routine of the objective function type includes the objective of preparing at least a given, preferentially previously defined, minimum number of beverages, including in a substantially successive manner and based upon the energy available and other characteristics of said internal energy source.

This way it results possible to provide the preparation of at least eight, preferentially at least twelve, particularly preferred at least eighteen beverages, each thereof with a volume of 20 to 50 ml, and with requisites of pressure of at least 8 bar and of temperature between 80°C and 100°C, or a number of beverages with an equivalent energy demand, only with use of the energy supplied by an internal energy source, whereby the time of preparation of each beverage is preferentially of at most 70 seconds, and the extraction time is preferentially of 15 - 30 seconds.

In this sense, according to a preferred embodiment, the machine according to the present invention presents and energy management device provided with a control routine of the objective function type that includes the objective of minimizing the total amount of energy supplied to the energy consumers, in particular to the fluid compression means and to the fluid heating means, in each beverage preparation cycle. Moreover, said control routine of the objective function type includes the regulation of the energy distribution to said energy consumers in substantially real time, so as to optimize the energy discharge from the internal energy source and subsequent periods of regeneration thereof.

According to another preferred embodiment, the machine according to the present invention presents an energy management device that is provided so that it can identify and execute a set of actions associated with said control routine of the objective function type in almost real time, including in pulsed manner. To this effect, said energy management device is provided so that it can at each moment operationally recognize and/or characterize the energy availability from energy sources, external and/or internal, so as to provide an indication thereof by means of at least one machine use interface and to determine the energy supply to at least some of the energy consumers and respective operation parameters.

According to another preferred embodiment, said energy management device is provided so that it can determine the energy supply to the fluid compression means and to the fluid heating means in at least partially sequential manner or in intervals, including the supply in discrete impulses, preferentially based upon a set of previously defined operation parameters.

According to another preferred embodiment, said energy management device is provided so that it can vary operation parameters at least of said fluid compression means and/or fluid heating means in substantially real time, in particular so as to reduce the energy demand in each beverage extraction cycle.

According to another preferred embodiment, the beverage preparation machine according to the present invention presents fluid compression means and fluid heating means that are the same and are provided so as to operate in substantially similar manner, regardless of the value of electrical tension provided by said external energy source. To this effect, the machine according to the present invention presents means for connecting to at least one external energy source, including preferentially by means of a voltage transformation device, and the electrical energy consumers are provided so that the electrical energy is always supplied at low voltage, preferentially at a value inferior to 50 V, preferentially between 24 V and 36 V, preferentially in direct current (DC).

According to another preferred embodiment, said internal energy source presents a maximum nominal storage capacity of 120 Wh, preferentially of 80 Wh and a discharge capacity of at least 5 C, preferentially at least 10 C.

Moreover, the machine presents a total weight inferior to 5 kg, preferentially inferior to 2,5 kg, whereby respective internal energy sources present a maximum weight of 1,5 kg, preferentially a maximum weight of 0,8 kg. Examples of technologies that can be considered for internal energy source include batteries of lithium polymers (LiPo), and of lithium iron phosphate (LiFePO4), and other similar.

According to another preferred embodiment, the machine according to the present invention at least temporarily presents, a voltage transformation device that is disposed between an external energy source and said energy consumers and presents a nominal power of maximum 800 W, preferentially maximum 500 W, and, when operationally connected, the voltage transformation device is provided externally or internally of the chassis of said machine, and with means for connecting to the machine of the removable type or not, whereby said voltage transformation device is preferentially provided as a wide entry interval device.

Another objective of the present invention is to provide a process that enables the optimized use of available energy resources for preparing a beverage, in particular in view of minimizing the use of an internal energy source.

This goal is attained by means of a process according to claim 10.

In particular, it is attained by means of a process whereby once the machine is turned on by a user, an energy management device provided in the machine recognizes and/or characterizes the energy availability from at least one energy source and, once a beverage preparation cycle is initiated by a user, said energy management device measures and regulates the energy supply from at least said energy source and at least to said energy consumers, according to a control routine of the objective function type, including the objective of minimizing the energy consumption in each beverage extraction cycle, preferentially as a function of operation parameters and/or of respective variation since the previous beverage extraction cycle, and/or of the energy available in the, at least one, energy source being used in each beverage extraction cycle.

According to a preferred embodiment, said energy management device regulates the energy supply in at least partially sequential manner or in intervals, including in pulsed manner in discrete intervals, at least to said fluid compression means and fluid heating means. In particular, the regulation of energy supply enables maintaining the operation of said means while simultaneously majoring the total amount of energy demanded in each moment.

According to a preferred embodiment, in particular in the case of a beverage extraction cycle whereby the machine only uses an internal energy source, the energy management device measures and/or regulates at least one operation parameter from at least one of the energy consumers, including said fluid compression means and fluid heating means, including the heating temperature thereof, including so as to minimize the energy discharge rate from an internal energy source, including as a function of the time lapsed since the previous beverage extraction cycle.

According to another preferred embodiment, said energy management device regulates the frequency and/or the velocity of the fluid compression means, so as to ensure a preferentially previously defined fluid temperature downstream of the fluid heating means comprised in the range between 80 °C and 100 °C.

According to another preferred embodiment, the heating power provided by said fluid heating means is determined by means of a controller, including of the proportional integral derivative type ("PID controller") or similar, re-fed by means of temperature probe, including of the negative temperature coefficient type ("NTC probe") or similar, whereby the characterization of the heating temperature preferentially considers the temperature probe delay. It is preferred when the measurement of the energy consumption is carried out based upon the measurement of the tension and intensity of electrical current in at least some of the energy consumers, and of the heating temperature in the fluid heating means.

In the scope of the present description, by "internal energy source" there shall be understood a device and/or respective operational connection means, with or without final energy generation capacity from any one primary energy source, including energy storage and conversion devices, such as for example batteries and similar, and that provide energy supply, in particular electrical energy, without the machine for preparing beverages needing to be connected to a fixed electrical energy distribution grid.

In the scope of the present invention, it is considered that the internal energy sources correspond to means for temporary storage or accumulation of any energy form enabling electrical energy supply, in particular those devices that operate based upon an electrochemical and/or electromagnetic energy conversion process, such as for example batteries and similar, in particular at low voltage. Moreover, it is considered that the internal energy sources correspond to devices provided inside or outside of the machine for preparing beverages, with or without possibility of access and/or substitution from the outside, preferentially configured for being used exclusively with the machine for preparing beverages.

The machine for preparing beverages carries out extraction cycles including the compression of at least one processing fluid, for example water, with a pressure of at least 8 bar, and the heating of at least one processing fluid up to a temperature of 80°C - 100 °C.

The machine for preparing beverages according to the present invention is used for preparing coffee, milk, tea and similar, and uses water, milk, coffee and similar, as processing fluid.

### List of Figures

The invention shall now be explained in greater detail based upon the preferred embodiments and the attached Figures.

The Figures show:
- Figure 1:: schematic representations in side cut, front and top views, respectively, of a first embodiment of a machine according to the invention;
- Figure 2:: schematic representations in side cut, front and top views, respectively, of a second embodiment of a machine according to the invention.

### Description of preferred embodiments of the invention

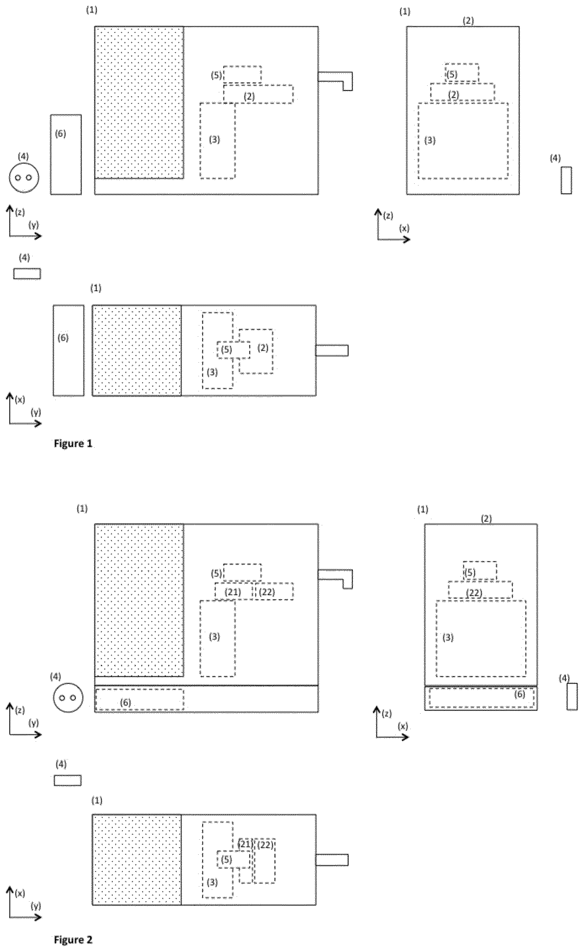

**Figure 1** schematically shows a machine (1) for preparing beverages according to the present invention, including coffee of the espresso type and similar, and presenting means for connecting to at least one external energy source (4), such as for example fixed electrical energy grids, eventually to at least two external energy sources (4) presenting different values of nominal, for example 110 V AC and 230 V AC. The possibility of operating with different external energy sources (4) is relevant so as to reduce the costs of adapting the main energy consumers (2) to different voltages, for example for use in different regions or countries.

According to a preferred embodiment, besides of connection to an external energy source (4) the machine further presents the possibility of optionally using at least one internal energy source (3). The machine (1) presents a plurality of electrical energy consumers (2) (represented in simplified manner), and an energy management device (5) that regulates the distribution of electrical energy to at least some of these energy consumers (2) from said electrical energy sources (3, 4).

According to a preferred embodiment, the electrical energy is supplied to the energy consumers (2) in the same voltage value of the external energy source (4), including in alternated current.

According to a preferred embodiment, the electrical energy is supplied to the energy consumers (2) always at low voltage, preferentially in direct current, that is, below 50 V DC, preferentially between 24 V DC and 36 V DC. In this case, when the machine (1) is connected to an external energy source (4), the connection is made by means of an electrical tension transformation device (6), preferentially provided as a wide interval entry transformer. The voltage transformation device (6) is provided externally to the chassis of the machine (1) or, preferentially, in a respective chassis of machine, and with means for connecting to the machine (1) of removable type or not. Therefore, according to a preferred embodiment, the energy consumers (2) are the same and provided that they operate in a substantially similar manner, regardless of the value of nominal electrical tension provided by the external energy source (4).

According to a first inventive aspect, the machine (1) presents an energy management device (5) provided so that it can regulate the operation of at least some of the energy consumers (2) by means of a control routine of the objective function type, whereby this objective function includes at least the objective of minimizing the electrical energy required by the main energy consumers (2) in each beverage preparation cycle.

Moreover, in case of using said internal energy source (3), it is preferred when said control routine of the objective function type further includes the maximization of the number of beverages that can be prepared with the energy available in said internal energy source (3), preferentially includes the provision of at least a minimum number of beverages.

Said energy management device (5) is further provided so that it can identify and execute in almost real time a set of actions associated with said control routine of the objective function type, including recognizing and/or characterizing the energy availability from each of said energy sources (3, 4), selecting which energy source (3, 4) to use and determining the energy supply in at least partially sequentially manner or in intervals in time, including the supply in discrete impulses, to said fluid compression means (21) and fluid heating means (22), preferentially based upon a previously defined set of parameters.

According to a preferred embodiment, the average nominal electrical power of the machine (1), during each beverage extraction cycle, is inferior to 450 W, preferentially is inferior to 350 W. In particular, the average nominal electrical power of the machine (1) is at most 20% superior, preferentially at least approximately equal to the nominal electrical power of said fluid heating means (22).

According to a preferred embodiment, the energy management device (5) and the internal energy source (3) are provided so that there can be successively prepared at least eight, preferentially at least twelve beverages, particularly preferred at least eighteen beverages, each thereof with a volume of 20 to 50 ml, with requirements of temperature between 80° and 100° and pressure of at least 8 bar, or a number of beverages with an equivalent energy demand, using the energy supplied by said internal energy source (3), whereby the time of preparation of each beverage is preferentially of at most 70 seconds, and the beverage extraction time is of 15 - 30 seconds. It is thus advantageously provided a minimum service, in terms of number of beverages, in autonomous operation mode from an external energy source (4).

The machine presents at least one internal energy source (3) that presents a nominal maximum storage capacity of 100 Wh, preferentially of 70 Wh and a discharge capacity of at least 5 C, preferentially at least 10 C, whereby the machine presents a total weight inferior to 5 kg, preferentially inferior to 2,5 kg, and said internal energy source (3) presents a weight of at most 1,5 kg, preferentially at most 0,8 kg. These characteristics are particularly suited for ensuring a given level of service, as described above, without compromising the portability of the machine (1).

**Figure 2** presents schematic representations of the machine (1) similar to those of Figure 1, in this case discriminating in a merely indicative manner the existence of the fluid compression means (21) and fluid heating means (22). Advantageously, these are the same and operate in substantially similar manner regardless of the value of electrical tension provided by the external energy source (4). That is, the machine (1) can operate in connection with external energy sources (4) of different voltage, including for example 110 V AC or 230 V AC, given that when the machine (1) is connected to an external energy source (4), the connection is made by means of a electric tension transformation device (6). Said voltage transformation device (6) is provided externally - as represented in Figure 1 - or internally to the chassis of the machine (1) - as represented in Figure 2 -, and with means for connecting to the machine (1) of the removable type or not, whereby the voltage transformation device (6) is preferentially provided as wide entry interval transformation device.

A process according to the present invention includes turning the machine (1) on, recognizing and/or characterizing, by means of an energy management device (5) provided in said machine (1) for preparing beverages, the energy availability from at least one energy source (3, 4), initiating a beverage preparation cycle, measuring and regulating, by means of said energy management device (5), operation parameters of at least some energy consumers (2) provided in said machine (1) for preparing beverages, including at least of the fluid compression means (21) and of the fluid heating means (22), whereby said energy management device (5) regulates the supply of energy to at least some energy consumers (2) according to a control routine of the objective function type, including the objective of minimizing the energy consumption in each beverage preparation cycle, preferentially as a function of operation parameters and/or of a respective variation since a previous beverage extraction cycle, and/or of the energy available in the, at least one, energy source (3, 4).

In particular, during each beverage preparation cycle, the energy management device (5) regulates the evolution in time of the energy supply to the fluid compression means (21) and to the heating fluid means (22), including in at least partially sequential manner or in intervals, including in pulsed manner in discrete moments, thereby reducing the simultaneous demand from both.

According to another aspect, the energy management device (5) regulates at least one operation parameter at least of the fluid compression means (21) and/or of the fluid heating means (22). In particular, the energy management device (5) actuates a variation of the frequency and/or of the velocity of the fluid compression means (21), so as to ensure a preferentially previously defined fluid temperature comprised in the range between 80 °C and 90 °C, downstream of the fluid heating means (22). Moreover, the heating power provided by the fluid heating means (22) is regulated by means of a controller, including of the derivative integral type ("PID controller") or similar, re-fed by temperature probe, including of the negative temperature coefficient ("NTC probe") or similar, whereby the characterization of the heating temperature takes into consideration the delay of the heating probe. Moreover, the measurement of the energy consumption is carried out based upon the measurement of the tension and intensity of current in at least some of the energy consumers (2), and preferentially of the heating temperature in the fluid heating means (22).

## Claims

1. Machine (1) for preparing beverages from at least one edible aromatic substance, including coffee of the espresso type and similar, presenting:
- a plurality of electrical energy consumers (2), including fluid compression means (21) and fluid heating means (22),
- at least one internal energy source (3),
- means for connecting to at least one external energy source (4), and
- an energy management device (5) adapted so it can regulate the operation at least of said fluid compression means (21) and fluid heating means (22),
**characterized**
**in that** said internal energy source (3) presents a maximum nominal storage capacity of 120 Wh, preferentially of 80 Wh and a discharge capacity of at least 5 C, preferentially at least 10 C, and
**in that** said energy management device (5) is provided so that it regulates the operation of said energy consumers, including at least one of said fluid compression means (21) and fluid heating means (22), by means of a control routine of the objective function type presenting at least one objective including minimization of total energy supplied to said energy consumers (2) in each beverage extraction cycle, whereby the measurement of the energy consumption is based upon the measurement of the tension and intensity of current and of the heating temperature in the fluid heating means (22), and
whereby the energy management device (5) is provided so that actuates a variation of the frequency and/or of the velocity of the fluid compression means (21).

2. Machine (1) according to claim 1, **characterized in that** presents a voltage transformation device (6) disposed between an external energy source (4) and said energy consumers (2) and presents a nominal power of maximum 800 W, preferentially maximum 500 W.

3. Machine (1) according to claim 1 or 2, **characterized in that** said voltage transformation device (6) is provided externally or internally of the chassis of said machine (1), and with means for connecting to the machine (1) of the removable type or not, whereby said voltage transformation device (6) is preferentially provided as a wide entry interval device.

4. Process for energy management in a machine (1) for preparing beverages according to any one of previous claims 1 to 3, comprising the following steps:
- providing an internal energy source (3) to said machine (1);
- turning the machine (1) on;
- recognizing and/or **characterizing, by** means of an energy management device (5) provided in said machine (1) for preparing beverages, the energy availability from said internal energy source (3);
- initiating a beverage preparation cycle;
- measuring and regulating, by means of said energy management device (5), operation parameters of at least some energy consumers (2) provided in said machine (1) for preparing beverages, including at least of the fluid compression means (21) and fluid heating means (22),
whereby said energy management device (5) regulates the energy supply at least to some of the energy consumers (2) according to a control routine of the objective function type, including the objective of minimizing the energy consumption in each beverage extraction cycle, as a function of operation parameters and respective variation since a previous beverage extraction cycle, and of the energy available in said internal energy source (3),
whereby the measurement of the energy consumption is based upon the measurement of the tension and intensity of current and of the heating temperature in the fluid heating means (22),
whereby the energy management device (5) actuates a variation of the frequency and/or of the velocity of the fluid compression means (21).

5. Process according to claim 4, **characterized in that** said energy management device (5) regulates the energy supply in at least partially sequential manner or in intervals, including in pulsed manner in discrete intervals, at least to said fluid compression means (21) and fluid heating means (22).

6. Process according to claims 4 and 5, **characterized in that** said energy management device (5) measures and/or regulates at least one operation parameter from at least one of the energy consumers (2), including said fluid compression means (21) and fluid heating means (22) including the heating temperature thereof, including so as to minimize the energy discharge rate from an internal energy source (3), including as a function of the time lapsed since the previous beverage extraction cycle.

7. Process according to claims 4 to 6, **characterized in that** said energy management device (5) regulates the frequency and/or the velocity of the fluid compression means (21), so as to ensure a fluid temperature downstream of the fluid heating means (22) comprised in the range between 80 °C and 100 °C.

8. Process according to claims 4 to 7, **characterized in that** said energy management device (5) regulates the heating power provided by said fluid heating means (22) by means of a controller, including of the proportional integral derivative type ("PID controller") or similar, re-fed by means of temperature probe, including of the negative temperature coefficient type ("NTC probe") or similar, whereby the characterization of the heating temperature preferentially considers the temperature probe delay.

9. Process according to claims 4 to 8, **characterized in that** said energy management device (5) measures the energy consumption based upon the measurement of the tension and intensity of electrical current in at least some of the energy consumers (2), and preferentially of the heating temperature in the case of the fluid heating means (22).

## Patentansprüche

1. Maschine (1) zur Getränkezubereitung von mindestens einer essbaren aromatischen Substanz, einschließlich Kaffee wie Espresso und ähnlich, aufweisend:
- eine Mehrzahl von elektrischen Energieverbrauchern (2), einschließlich Flüssigkeitsdruck- (21) und - heizungsmittel (22),
- mindestens eine interne Energiequelle (3),
- Mittel, um mindestens eine externe Energiequelle (4) zu verbinden, und
- Eine Energieverwaltungsgerät (5) so angepasst, um den Betrieb von mindestens genanntem Flüssigkeitsdruck- (21) und -heizungsmittel (22) zu regulieren,
**dadurch gekennzeichnet, dass** genannte interne Energiequelle (3) eine maximale Nennspeicherkapazität von 120 Wh darstellt, vorzugsweise von 80 Wh und eine Abflussleistung von mindestens 5 C, vorzugsweise mindestens 10 C,
und dass genanntes Energieverwaltungsgerät (5) so vorhanden ist, um den Betrieb von genannten Energieverbrauchern zu regulieren, einschließlich mindestens einen genannten Flüssigkeitsdruck- (21) und -heizungsmittel (22), mittels einer Kontrollroutine der objektiven Zielfunktion darstellend mindestens ein Ziel einschließlich Minimierung von Gesamtenergie geliefert an genannte Energieverbrauchern (2) in jedem einzelnen Getränkeabsaugungsablauf,
wobei die Ausmessung des Energieverbrauchs auf die Ausmessung des Drucks und der Intensität der Strom- und Heizungstemperatur im Flüssigkeitsheizungsmittel (22) beruht, und
wobei das Energieverwaltungsgerät (5) so ersorgt ist, um eine Abweichung der Frequenz und/ oder der Geschwindigkeit des Flüssigkeitsdruckmittels (21) zu betätigen.

2. Maschine (1) gemäß Anspruch 1 **dadurch gekennzeichnet, dass** es ein Spannungsverwandlungsgerät (6) angeordnet zwischen einer externen Energiequelle (4) und genannter Energieverbrauchern (2) und eine Nennkraft von maximal 800 W darstellt, vorzugsweise maximal 500 W.

3. Maschine (1) gemäß Anspruch 1 oder 2 **dadurch gekennzeichnet, dass** genanntes Spannungsverwandlungsgerät (6) innerhalb oder außerhalb des Gehäuses von genannter Maschine (1) vorhanden ist, und ausgerüstet um die Maschine (1) vom bewegbaren Typ oder nicht zu verbinden, wobei genanntes Spannungsverwandlungsgerät (6) vorzugsweise als ein breites Einfuhrintervallgerät vorhanden ist.

4. Verfahren zur Energieverwaltung einer Getränkezubereitungsmaschine (1) gemäß einer der vorigen Ansprüche 1 bis 3 bestehend aus den folgenden Schritten:
- Versorgung einer internen Energiequelle (3) an genannte Maschine (1);
- Anschalten der Maschine (1);
- Erkennung und/ oder Kennzeichnung mittels eines Energieverwaltungsgerät (5) vorhanden in genannter Getränkezubereitungsmaschine (1), die Energieverfügbarkeit von genannter internen Energiequelle (3) ;
- Ausführung eines Getränkezubereitungsablaufes;
- Ausmessung und Regulierung mittels eines genannten Energieverwaltungsgerät (5), Betriebsparameter von mindestens einigen Energieverbrauchern (2) vorhanden in genannter Getränkezubereitungsmaschine (1), einschließlich mindestens der Flüssigkeitsdruck- (21) und -heizungsmittel (22),
wobei genanntes Energieverwaltungsgerät (5) die Energieversorgung mindestens zu einigen Energieverbrauchern (2) reguliert, gemäß einer Kontrollroutine des Zielfunktionstyps, einschließlich des Zieles, den Energieverbrauch bei jedem Getränkeabsaugungsablauf zu minimieren, als Funktion der Betriebsparameter und entsprechender Abweichung ab einem vorigen Getränkeabsaugungsablauf, und der Energie verfügbar in genannter internen Energiequelle (3),
wobei die Ausmessung des Energieverbrauchs auf die Ausmessung des Drucks und der Intensität der Strom- und Heizungstemperatur im Flüssigkeitsheizungsmittel (22) beruht, wobei das Energieverwaltungsgerät (5) eine Abweichung der Frequenzen und/ oder der Geschwindigkeit der Flüssigkeitsdruckmittel (21) betätigt.

5. Verfahren gemäß Anspruch 4 **dadurch gekennzeichnet, dass** das Energieverwaltungsgerät (5) die Energieversorgung reguliert in mindestens teils aufeinanderfolgender Weise oder in Intervallen, einschließlich in Pulsweise in diskreten Intervallen, mindestens zu genanntem Flüssigkeitsdruck- (21) und -heizungsmittel (22).

6. Verfahren gemäß Ansprüche 4 und 5 **dadurch gekennzeichnet, dass** das genannte Energieverwaltungsgerät (5) mindestens ein Betriebsparameter von mindestens einem der Energieverbrauchern (2) misst und/ oder reguliert, einschließlich genannten Flüssigkeitsdruck- (21) und - heizungsmittel (22) einschließlich die Heiztemperatur davon, einschließlich so, um die Energieabflussrate von einer internen Energiequelle (3) zu minimieren, einschließlich wie eine Zeitfunktion abgelaufen ab dem vorigen Getränkeabsaugungsablauf.

7. Verfahren gemäß Ansprüche 4 bis 6 **dadurch gekennzeichnet, dass** das genannte Energieverwaltungsgerät (5) die Frequenz und/ oder die Geschwindigkeit des Flüssigkeitsdruckmittels (21) so reguliert, um die Flüssigkeitstemperatur stromabwärts des Flüssigkeitsheizungsmittels (22) zu sichern umfasst im Bereich zwischen 80°C und 100°C.

8. Verfahren gemäß Ansprüche 4 bis 7 **dadurch gekennzeichnet, dass** das genannte Energieverwaltungsgerät (5) die Heizungskraft versorgt durch genannten Flüssigkeitsheizungsmittel (22) mittels eines Reglers reguliert, einschließlich des proportional-integralderivative Typus ("PID Regler") oder ähnlich, versorgt mittels eines Temperaturfühlers, einschließlich eines negativen Temperaturkoeffizienten ("NTC probe") oder ähnlich, wobei die Kennzeichnung der Heizungstemperatur vorzugsweise den Temperaturfühlerverzug betrachtet.

9. Verfahren gemäß Ansprüche 4 bis 8 **dadurch gekennzeichnet, dass** das genannte Energieverwaltungsgerät (5) den Energieverbrauch beruhend auf die Messung des Drucks und Intensität des elektrischen Stromes in mindestens einigen Energieverbrauchern (2) misst und vorzugsweise der Heizungstemperatur im Falle des Flüssigkeitsheizungsmittels (22) .

## Revendications

1. Machine (1) pour la préparation de breuvages à partir d'au moins une substance aromatique comestible, y compris le café de type expresso et similaire, présentant :
- une pluralité de consommateurs d'énergie électrique (2), y compris des moyens de compression de fluide (21) et des moyens de réchauffement de fluide (22),
- au moins une source d'énergie interne (3),
- des moyens pour la connexion à au moins une source d'énergie externe (4) et
- un dispositif de gestion d'énergie (5) adapté afin qu'il puisse réguler l'opération au moins des dits moyens de compression de fluide (21) et moyens de réchauffement de fluide (22),
**caractérisé par le fait que** la source d'énergie interne (3) présente une capacité de stockage nominale maximale de 120 Wh, de préférence de 80 Wh et une capacité de décharge d'au moins 5 C, de préférence au moins de 10 C et
**par le fait que** ledit dispositif de gestion d'énergie (5) est fourni afin qu'il régule l'opération des dits consommateurs d'énergie, y compris au moins un des dits moyens de compression de fluide (21) et moyens de réchauffement de fluide (22), au moyen d'une routine de contrôle du type de fonction d'objectif présentant au moins un objectif y compris la minimisation de l'énergie totale fournie aux dits consommateurs d'énergie (2) dans chaque cycle d'extraction de breuvage,
où la mesure de la consommation d'énergie est fondée sur la mesure de la tension et de l'intensité du courant et de la température de réchauffement dans les moyens de réchauffement de fluide (22) et
où le dispositif de gestion d'énergie (5) est fourni afin que cela actionne une variation de la fréquence et/ou de la vitesse des moyens de compression de fluide (21).

2. Machine (1) selon la revendication 1, **caractérisée par le fait qu'**elle présente un dispositif de transformation de tension (6) disposé entre une source d'énergie externe (4) et lesdits consommateurs d'énergie (2) et qu'elle présente une puissance nominale de 800 W maximum, de préférence un maximum de 500 W.

3. Machine (1) selon la revendication 1 ou 2, **caractérisée par le fait que** ledit dispositif de transformation de tension (6) est fourni à l'extérieur ou à l'intérieur du châssis de ladite machine (1) et avec des moyens pour connecter à la machine (1) de type amovible ou non, où ledit dispositif de transformation de tension (6) est de préférence fourni comme un dispositif d'intervalle à large entrée.

4. Processus de gestion d'énergie dans une machine (1) pour la préparation de breuvages selon une quelconque revendication précédente entre 1 et 3, comprenant les étapes suivantes :
- fournir une source d'énergie interne (3) à ladite machine (1) ;
- mettre en marche la machine (1) ;
- reconnaître et/ou caractériser, au moyen d'un dispositif de gestion d'énergie (5) fourni dans ladite machine (1) pour la préparation de breuvages, la disponibilité de l'énergie de ladite source d'énergie interne (3) ;
- débuter le cycle de préparation de breuvage ;
- mesurer et réguler au moyen d'un dispositif de gestion d'énergie (5), l'opération des paramètres d'au moins quelques consommateurs d'énergie (2) fournis dans ladite machine (1) pour la préparation de breuvages, y compris au moins des moyens de compression de fluide (21) et des moyens de réchauffement de fluide (22),
où ledit dispositif de gestion d'énergie (5), régule ledit l'alimentation en énergie au moins vers quelques-uns des consommateurs d'énergie (2) selon une routine de contrôle du type de fonction d'objectif, y compris l'objectif de minimiser la consommation d'énergie dans chaque cycle d'extraction de breuvage, comme une fonction d'opération de paramètres et de la variation respective, à partir d'un cycle d'extraction de breuvage préalable et de l'énergie disponible dans ladite source d'énergie interne (3),
où la mesure de la consommation d'énergie est fondée sur la mesure de la tension et de l'intensité du courant et de la température de réchauffement (22),
où le dispositif de gestion d'énergie (5) actionne une variation de la fréquence et/ou de la vitesse des moyens de compression de fluide (21).

5. Processus selon la revendication 4, **caractérisé par le fait que** le dispositif de gestion d'énergie (5) régule l'alimentation en énergie selon au moins une manière partiellement séquentielle ou par intervalles, y compris d'une manière pulsée en intervalles discrets, au moins vers les dits moyens de compression de fluide (21) et moyens de réchauffement de fluide (22).

6. Processus selon les revendications 4 et 5, **caractérisé par le fait que** ledit dispositif de gestion d'énergie (5) mesure et/ou régule au moins un paramètre d'opération à partir d'au moins un des consommateurs d'énergie (2), y compris les dits moyens de compression de fluide (21) et moyens de réchauffement de fluide (22) y compris la température de réchauffement des mêmes, y compris afin de minimiser le taux de décharge d'énergie d'une source d'énergie interne (3), y compris comme une fonction de temps écoulé depuis le cycle d'extraction de breuvage antérieur.

7. Processus selon les revendications 4 à 6, **caractérisé par le fait que** le dispositif de gestion d'énergie (5) régule la fréquence et/ou la vitesse des moyens de compression de fluide (21), afin d'assurer la température de fluide en aval des moyens de réchauffement de fluide (22) compris dans une gamme entre 80° C et 100° C.

8. Processus selon les revendications 4 à 7, **caractérisé par le fait que** ledit dispositif de gestion d'énergie (5) régule la puissance de réchauffement fournie par lesdits moyens de réchauffement de fluide (22) au moyen d'un régulateur, y compris de type dérivatif intégral proportionnel (« régulateur PID ») ou similaire, réintroduits au moyen d'une sonde de température, y compris de type coefficient de température négatif (« Sonde NTC ») ou similaire, où la caractérisation de la température de réchauffement considère de préférence le délai de sonde de température.

9. Processus selon les revendications 4 à 8, **caractérisé par le fait que** ledit dispositif de gestion d'énergie (5) mesure la consommation d'énergie en se fondant sur la mesure de la tension et de l'intensité du courant électrique dans au moins quelques-uns des consommateurs d'énergie (2) et de préférence de la température de réchauffement en cas de moyens de réchauffement de fluide (22).
